# EUROPÄISCHE PATENTANMELDUNG

(11) **EP 0 539 661 A2**
(43) Veröffentlichungstag der Anmeldung: **05.05.1993**
(21) Anmeldenummer: 92112071.3
(22) Anmeldetag: 15.07.1992
(51) Int. Cl.: F02M 31/16, F02M 31/125

(54) **Dieselvorwärmer für Motoren, insbesondere Fahrzeugmotoren**

(30) Priorität: 18.07.1991 DE 4123866; 15.07.1992 DE 4223030
(71) Anmelder: Müller, Hermann-Frank, D-53177 Bonn (DE)
(72) Erfinder: Fuchs, Werner, W-8000 München 19 (DE); Jordan, W., Prof. Dr. Ing., Grevenbroich (DE)
(74) Vertreter: Dallmeyer, Georg, Dipl.-Ing.

(57) **Zusammenfassung**

Die erfindungsgemäßen Dieselvorwärmer mit Wärmetauscher und elektrischer Heizung dienen beispielsweise bei niedrigen Außentemperaturen zur Erhaltung der Fließfähigkeit von Dieselkraftstoff und darüber hinaus zur raschen Kraftstoff-Temperierung, um schnellstens definiertere Voraussetzungen für eine sparsamere, sowie schadstoffärmere Verbrennung und für besseren Motorlauf zu erzielen.
Die gezeigten und beschriebenen Diesel- bzw. Kraftstoffvorwärmer (1, 33) sind mit einer integrierten Steuer- bzw. Regelvorrichtung (8-23) versehen und sie sind an unterschiedliche Motoren und Betriebsbedingungen sehr anpassungsfähig. Ein spezielles elektrisches Heizelement ermöglicht in Verbindung mit der integrierten Steuer- bzw. Regelvorrichtung (8-23) und dem Wärmetauscher (6, 34) die besonders rasche und ökonomische Vorwärmung des Kraftstoffes.
Weiterhin werden an Wärmetauschern (48, 55, 68, 80) verschiedene vorteilhafte Kopplungen und Mechanismen zur Dosierung der Wärmeübertragung, z.B. vom Kühlwasser zum Kraftstoff, gezeigt und beschrieben.

## Beschreibung

Die Erfindung betrifft Dieselvorwärmer für Motoren, insbes. Fahrzeugmotoren gemäß dem Oberbegriff des Anspruchs 1.

Bekannt sind elektrisch beheizte Dieselvorwärmer und solche, die das Kühlwasser, das Motoröl, das Abgas, den Motorblock selbst und ähnliche Wärmequellen zum Erwärmen des Kraftstoffs nutzen.
Nachteilig bei elektrischer Kraftstoff-Erwärmung ist der relativ große, langandauernde Stromverbrauch mit entsprechender Belastung der Batterie und des elektrischen Bordsystems; und nachteilig bei der nichtelektrischen Aufheizung mittels Wärmetauscher ist insbes. die träge Wirkung.
Sie könnte zwar durch Überdimensionierung des Wärmetauschers verbessert werden, bringt dann aber oft den Nachteil mit sich, daß der Kraftstoff u.U. bis zur Dampfblasenbildung überhitzt werden kann.
Ursprünglich und hauptsächlich sollten Dieselvorwärmer die Paraffinierung des Dieselkraftstoffes bei niedrigen Temperaturen beseitigen und verhindern, um das Fließverhalten, insbes. durch das Kraftstoff-Filter, zu verbessern und dadurch Start- und Kaltlaufschwierigkeiten des Motors zu vermeiden. Heute sollte ein Dieselvorwärmer zusätzlich noch weitere Aufgaben mit höheren, umweltschonenderen Anforderungen erfüllen, indem er dazu beiträgt, die Kaltlaufzeit zu verkürzen, den Motorlauf zu verbessern und den Kraftstoffverbrauch wie Schadstoffemissionen zu reduzieren. Zur Erfüllung aller dieser Forderungen wird mit der vorliegenden Erfindung eine schnelle, steil ansteigende Kraftstofferwärmung bis auf eine bestimmte Temperatur (von ca. 50-60^{o}c) angestrebt und diese dann angenähert konstant gehalten, um für den Motorlauf rasch günstige, definierte Bedingungen zu schaffen und beizubehalten. Bekannte Dieselvorwärmer erfüllen die oben gestellten Forderungen nicht, oder sie haben die Nachteile, kompliziert und teuer aufgebaut zu sein, viel Platz zu beanspruchen und wenig Anpassungsfähigkeit zu besitzen. Eine gute Anpassungsfähigkeit soll u.a. angestrebt werden, um mit wenigen Dieselvorwärmer-Größen eine universellere Verwendung für unterschiedliche Motoren zu erreichen.

Aufgabe der vorliegenden Erfindung ist es, die oben aufgestellten Forderungen nach schneller und günstiger KraftstoffTemperierung auf einfache, ökonomische, sowie zuverlässige Weise mit platz- und kostensparenden Vorwärmern zu erfüllen und bekannte Nachteile zu vermeiden. Diese Aufgabe wird erfindungsgemäß durch Merkmale gelöst, die in gekennzeichneten Teilen mehrerer Ansprüche enthalten sind. Durch die gekennzeichneten Merkmale des Anspruchs 1 erfüllen einfache und kostengünstig herstellbare Bauelemente, die auf engem Raum unterbringbar sind, mehrere Funktionen. Hierbei dient und wirkt die Kraftstoff-Heizwendel gleichzeitig als Elektromagnet und das Ventil, oder besser sein Kolben, als Magnetanker. Weitere Merkmale der Erfindung enthält Anspruch 2 mit einer vorteilhaften Weiterbildung, bei der ebenfalls Bauelemente funktionsmäßig mehrfache Aufgaben erfüllen und dadurch erhebliche Kostenreduzierungen ermöglichen. Um eine einfache, günstige Anpassungsfähigkeit der beschriebenen Dieselvorwärmer an unterschiedliche Motoren oder an verschiedene klimatische Bedingungen zu ermöglichen und zusätzliche Vorteile wie Kosteneinsparungen durch Typenreduzierung und geringere Lagerhaltüngskosten zu erreichen, sind Merkmale gemäß einer fortgesetzten Weiterbildung der Erfindung, in den nachfolgenden Ansprüchen gekennzeichnet.

Die Vorteile der beschriebenen Dieselvorwärmer liegen einerseits in ihrer günstigen Funktion, durch die der Kraftstoff besonders schnell und ökonomisch temperiert wird, und andererseits in dem überraschend einfachen, wenig Platz beanspruchenden Aufbau, der Material- und Gewichtseinsparungen sowie eine kostengünstige Herstellung ermöglicht. Die elektrische Kraftstoffheizung wirkt hilfsweise und automatisch nur, wenn und solange sie bei niedrigen Temperaturen, z.B. bei einem Kaltstart, erforderlich ist. Sonst erfolgt die Kraftstofftemperierung durch den Wärmetauscher, der dazu z.B. die Kühlwassertemperatur nutzt. Eine unnötige, elektrische Kraftstofferwärmung wird selbsttätig vermieden, indem die ansteigende Motor- bzw. Kühlwassertemperatur sofort zur Dieselvorwärmung beiträgt, um zunächst die elektrische Beheizung, zu unterstützen und sie dann automatisch abzuschalten, wenn der Wärmetauscher allein die gewünschte Kraftstofftemperatur erreicht. Durch die mit den beschriebenen Dieselvorwärmern erreichbare rasche Temperaturerhöhung wird die Zündwilligkeit des Kraftstoffs schneller verbessert, was insbes. beim Kaltstart und während der Kaltlaufphase eines Motors vorteilhaft ist. Mit besserer Verbrennung und der Verkürzung der Kaltlaufzeit sinken auch der Kraftstoffverbrauch und die Schadstoffemission. Selbst zur Reduzierung von Reibleistung, Verschleiß und dem während des Kaltlaufes verstärkten Motorlaufgeräusch kann ein effektiver, schnell wirkender Dieselvorwärmer beitragen. Für den betriebswarmen Motor bringt der temperierte Kraftstoff mit entsprechend gleichmäßigerer Dichte definiertere Voraussetzungen für optimalere Einspritzung, Verbrennung und Energieumsetzung. Weitere Vorteile zeigt die folgende Beschreibung auf.

Nachstehend wird die Erfindung anhand von in Zeichnungen dargestellten Ausführungsbeispielen näher erläutert.
Es zeigt
- Fig.1: eine Gesamtansicht eines Dieselvorwärmers mit einem Wärmetauscher und einem Teilschnitt durch seine elektrische Heizungs- und Steuervorrichtung,
- Fig.1a: ein schlangenförmiges Kanalsystem, das vom Wärmetauscher gemäß Fig.1 abgewickelt und in Umfangsrichtung verkürzt dargestellt ist,
- Fig.2: einen Schnitt durch eine weitere elektrische Heiz- und Regelvorrichtung z.B. für einen Dieselvorwärmer gemäß Fig.1,
- Fig.3: einen Schnitt durch einen Dieselvorwärmer mit einem ins wärmeabgebenden Medium eintauchbaren Wärmetauscher und mit einer elektrischen Heizungs- und Steuervorrichtung,
- Fig.4: einen Dieselvorwärmer mit einem eintauchbaren und regulierbaren Wärmetauscher,
- Fig.5: einen zur variablen Wärmeübertragung verstell- und regulierbaren Dieselvorwärmer,
- Fig.5a: einen Teilschnitt A-B am Dieselvorwärmer gemäß Fig.5,
- Fig.6: einen regulierbaren Dieselvorwärmer mit Hülsenschieber
- Fig.6a: einen Teilschnitt C-D zu Fig.6,
- Fig.7: einen regulierbaren Dieselvorwärmer mit Drehschieber,
- Fig.7a: eine Teilansicht von rechts zu Fig.7,
- Fig.8: einen regulierbaren Dieselvorwärmer m. Umgehungsleitung.

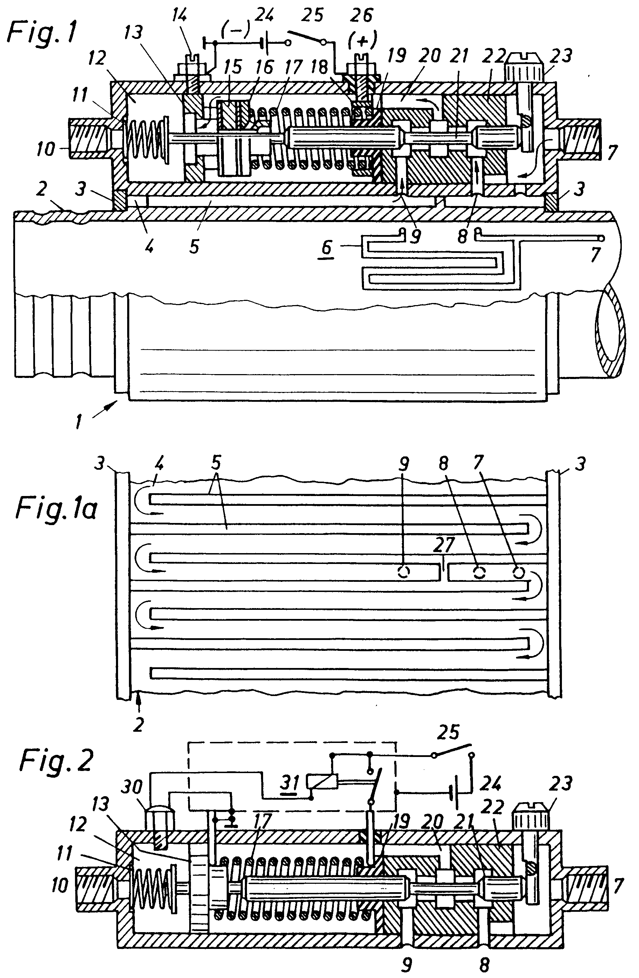

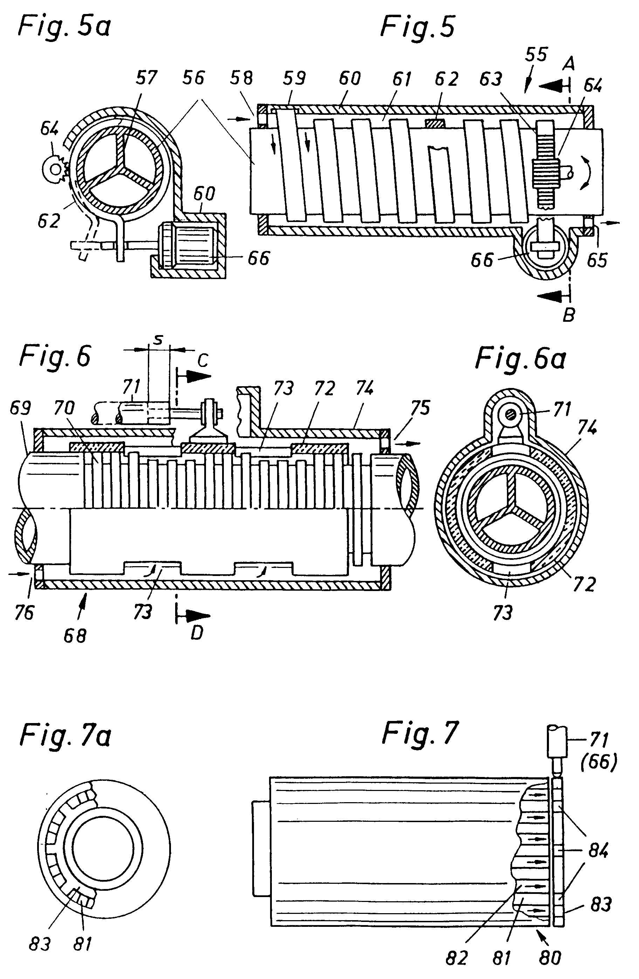

Die Fig.1 zeigt die Gesamtansicht eines Dieselvorwärmers 1, der zum Teil geschnitten dargestellt ist und der z. B. eine birnenförmige Seitenansicht besitzt (ähnlich wie das Gehäuse 74 von Fig.6a). Ein (Alu-) Rohr 2, das beispielsweise in den Kühlwasserkreislauf eines Dieselmotors eingeschaltet ist, und vom Kühlwasser durchströmt wird, dient als Wärmetauscher 6 und besitzt an seinem äußeren Umfang ein Kanalsystem 4 für den zu erwärmenden Kraftstoff. Das Rohr 2, das ebenso an seinem inneren Umfang zur besseren Wärmeübertragung mit Rippen (nicht gezeichnet) versehen sein kann, wird in den Kühlwasserkreislauf eingeschaltet, indem z.B. die Kühlwasser-Schlauchenden auf die Rohrenden aufgesteckt und mittels Schellen befestigt werden. Es kann aber auch ein Rohrende des Wärmetauschers 6 einseitig fest am Motor angeflanscht und dann der Kühlwasserschlauch an anderen, freien Rohrende angeschlossen werden. Das am Umfang des Rohres 2 gebildete Kanalsystem 4 kann beliebig geformt und z.B. durch Rippen 5 gebildet sein. Es ist beiderseitig durch ringförmige Scheiben 3 begrenzt und z.B. mittels Manschetten abgedichtet. Schematisch und verkleinert ist das Kanalsystem 4 in Fig.1 zur besseren Übersicht durch ein schlangenförmiges Rohr 6 mit der Zuleitung 7 und den Ableitungen 8 und 9 dargestellt. Darüber befinden sich an einem besonders ausgebildeten 3/2-Wegeventil 22 die dementsprechenden Leitungsanschlüsse 7, 8 und 9 für das Kanalsystem 4, das in Fig.1a konkret gezeigt ist. Das Umschalt- oder Wegeventil 22 befindet sich an einer Heizkammer 12. An den Rohranschluß 7 wird die Kraftstoff-Zuleitung angeschlossen, die, bekanntlich meistens über eine Kraftstoff-Vorförderpumpe, vom Tank her kommt; und der gegenüberliegende Rohranschluß 10 wird mit der Abflußleitung verbunden, die den Kraftstoff über ein Filter der Einspritzpumpe zuführt. Neben dem Wegeventil 22 befindet sich in der Heizkammer 12 eine elektrische Heizwendel 17, die z.B. einlagig aus relativ dickem Widerstandsdraht frei gewickelt sein kann. Die rohrförmig ausgebildete Heizwendel 17 ist durch eine elektrisch und elektromagnetisch leitfähige Buchse 16, die z.B. aus ferromagnetischem Werkstoff (Eisen) besteht, mit einem am Ausgang der Heizkammer 12 eingebauten PTC-Heizelement 15 verbunden und hintereinandergeschaltet. Das PTC-Heizelement 15 ist z.B. durch Metall-Scheiben oder -Belege stirnseitig kontaktiert und auf der linken Seite durch eine Metall-Buchse 13 und eine Kontaktschraube 14 mit dem Gehäuse des Dieselvorwärmers 1 bzw. mit der Minus- oder Masseleitung der (Fahrzeug-) Batterie 24 verbunden. Das rechte Ende der Heizwendel 17 ist durch eine Buchse 19 elektrisch isoliert und über einen leitfähigen Ringkontakt 18 mit dem vom Gehäuse isolierten Pluspol 26 verbunden. Das PTC-Heizelement 15 ist zweckmäßigerweise mit sehr geringem elektrischem Widerstand; d.h. für eine besonders kleine elektrische Spannung und große Stromstärke ausgelegt, so daß die elektrische Heizleistung zur elektrischen Kraftstoff-Vorwärmung hauptsächlich von der Heizwendel 17 und weniger vom PTC-Element 15 aufgebracht wird. Durch die geringe im PTC-Element 15 umgesetzte elektrische Leistung ist es wesentlich kleiner und kostengünstiger herstellbar, als wenn es, wie üblich, die gesamte elektrische Heizleistung allein aufbringen müßte. PTC-Element 15 und Heizwendel 17 sind so beschaffen und gebaut, daß sie innigen Kontakt mit dem Kraftstoff haben, der sie von allen Seiten her umströmen kann.
In besonders vorteilhafter Weise besteht die Heizwendel 17 selbst aus einem Werkstoff bzw. einer Legierung, die einen positiven Temperaturkoeffizienten besitzt und z.B. als Leiterbahn auf einer Keramikhülse aufgebracht sein kann. Dadurch ist die Selbstregelung in die Heizwendel 17a integriert und das separate PTC-Element 15 überflüssig. Die elektrische Heizkammer 12 ist durch gezeigte Kanäle einerseits mit dem mittleren Zweig 20 des Wegeventils 22 und andererseits durch die Buchse 13 mit dem Rohranschluß 10 der Abflußöffnung verbunden. Ein Kolben 21, der mindestens zum Teil aus ferromagnetischem Werkstoff (z.B. Eisen) besteht, ist innerhalb der Heizwendel 17 und des Wegeventils 22 axial verschiebbar gelagert. Am rechten Ende liegt er an einer Stellschraube 23, an die ihn eine Feder 11 drückt. Mit Hilfe dieser Stellschraube ist die Ruhestellung des Kolbens 21 fein und grob einstellbar bzw. wählbar. Die gezeigte einseitige Abflachung der Stellschraube 23 ermöglicht beispielsweise 2 wählbare Grund- oder Ruhestellungen des Kolbens 21 für Sommer- und Winterbetrieb. An Stelle der Schraube 23 könnte für die gleiche Aufgabe auch eine andere Stellvorrichtung, wie ein Druckknopf-Rastelement, eingebaut sein.
In einer anderen Ausführung könnte an Stelle der Feder 11 z.B. ein Bimetall- oder Dehnstoff-Thermostat in die Kammer 12 eingebaut werden, das mit dem Kolben 21 verbunden ist und auf denselben einwirkt, um ihn mit steigender Temperatur kontinuierlich oder diskontinuierlich nach rechts zu verstellen. Beide Verstellbewegungen sind wahlweise durch den Einbau tellerfederartiger Bimetallscheiben möglich, die ohne oder mit Schnappeffekt hergestellt werden.
Wie dargestellt, sind zwischen dem Kraftstoff-Zuleitungsanschluß 7 und dem Ableitungsanschluß 10 alle Bauteile 11-22 in Form einer Patrone in der hülsenartig ausgebildeten oberen Kammer 12 des Dieselvorwärmers 1 untergebracht. Die Wirkung des PTC-Heizelementes 15 mit seiner einfachen, selbsttätigen Temperatur- bzw. Heizstrom-Begrenzung bleibt hier trotz der relativ sehr kleinen Ausführung erhalten, wobei gleichzeitig das Magnetfeld der Heizwendel 17 für Schaltbzw. Steueraufgaben genutzt wird. Die vorteilhafte Ausführung und Nutzung von einzelnen Bauelementen für mehrfache Aufgaben ermöglicht den unkomplizierten, kostensparenden Aufbau mit gewonnener, gesteigerter Zuverlässigkeit. Die gedrungene, schlanke Bauweise ermöglicht Platzeinsparung und die Patronenform eine leichte Austauschbarkeit einer wichtigen Baugruppe. Insbesondere können solche Patronen mit unterschiedlichen Heizleistungen hergestellt und in ein und dasselbe Gehäuse des Dieselvorwärmers 1 eingesetzt werden. Dadurch erreichte Vorteile sind u.a. die universellere Anwendungsmöglichkeit des Dieselvorwärmers und gleichzeitig reduzierte Lagerhaltungskosten.

Die Fig.1a zeigt eine Draufsicht auf einen vom Umfang des Rohres 2 abgewickelten Abschnitt des Kanalsystems 4.
Die Rippen 5 des Rohres 2 sind wechselseitig nach rechts und links versetzt angeordnet, so daß sie abwechselnd an stirnseitigen Dichtungs-Ringen oder -Scheiben 3 anliegen und damit das schlangenförmige Kanalsystem 4 bilden, das am Wegeventil 22 durch eine Querrippe 27 unterbrochen ist. Der linke Kanal neben der Querrippe 27 ist mit dem Anschluß 9 des Wegeventils 22 verbunden, und in den rechten Kanal münden die Anschlußbohrungen oder Leitungen 7 und 8, wie es darüber die Fig.1 zeigt. Bei dieser Ausführung des Rohres 2 ist die unproblematische und kostengünstige Herstellbarkeit (z.B. aus Spritzguß) vorteilhaft.
Wirkungsweise: Kaltstart: Die elektrische Heizung ist mit ihren Anschlußklemmen 14 und 26 über einen symbolisch dargestellten Schalter 25 an die Fahrzeug-Batterie 24 angeschlossen. Zweckmäßigerweise wird der Schalter 25 bzw. die Heizwendel 17 gleichzeitig mit den Glühkerzen z.B. durch den Vorglühanlaßschalter oder ggfs. ein Vorglühsteuergerät eingeschaltet. Auch nach dem Anspringen des Motors ist der Schalter 25 weiterhin,z.B. zeitlich begrenzt oder solange der Motor läuft, geschlossen. Die von starkem, elektrischen Heizstrom durchflossene Heizwendel 17 zieht den Kolben 21 nach links. Dadurch wild der Kraftstoff-Leitungsweg vom Kanal 8 zum Kanal 20 gesperrt und gleichzeitig der Leitungsweg 9 durch den Kanal 20 zur elektrischen Heizkammer 12 ganz geöffnet. Der Kraftstoff durchströmt demzufolge vom Rohranschluß 7 aus das ganze Kanalsystem 4 des Wärmetauschers, bevor er durch die in Reihe nachgeschaltete elektrische Heizkammer 12 und die Abflußöffnung 10 fließt.
Der gestartete Motor unterstützt die elektrische Heizung, indem mit steigender Kühlwassertemperatur vorgewärmter Kraftstoff in die elektrische Heizkammer 12 strömt. Die Kraftstoff-Temperatur steigt demzufolge rasch an und die elektrische Heizphase wird verkürzt. Wenn die Kraftstofftemperatur auf den gewünschten Wert gestiegen ist, schaltet das am Ausgang der Heizkammer 12 angeordnete PTC-Heizelement 15 den elektrischen Heizstrom ab, so daß die Feder 11 den Kolben 21 nach rechts in die gezeichnete Ruhestellung zurückdrückt. In dieser Stellung, in der die Wärmetauscher-Leistung durch den Zweigstrom bei gering geöffnetem Ventilweg 9-20 reduziert ist, bleibt der Kolben 21, wenn der Motor seine Betriebstemperatur erreicht hat. Dabei ist die Kraftstofftemperatur an der Abflußöffnung 10 mittels der Schraube 23 so eingestellt, daß das PTC-Element 15 die elektrische Heizung abgeschaltet läßt. Bei niedrigen Temperaturen, wie in der Wintersaison, kann der Kolben 21 mittels der Stellschraube 23 etwas mehr nach links gestellt werden, so` daß der Anteil des Kraftstoffes, der durch den ganzen Wärmetauscher und den Kanal 9 fließt, vergrößert, und der kühlere Teilstrom durch den Kanal 8 entsprechend verkleinert wird. Um die gewünschte Kraftstoff-Vorwärmung schnell und stromsparend durchzuführen, ist der Wärmetauscher mit seinem Kanalsystem 4 leistungsmäßig überdimensioniert.
Durch die Umschaltung wird jedoch auf die dargelegte Weise eine Übererwärmung des Kraftstoffs vermieden, ohne dafür einen Thermostaten zu benötigen.

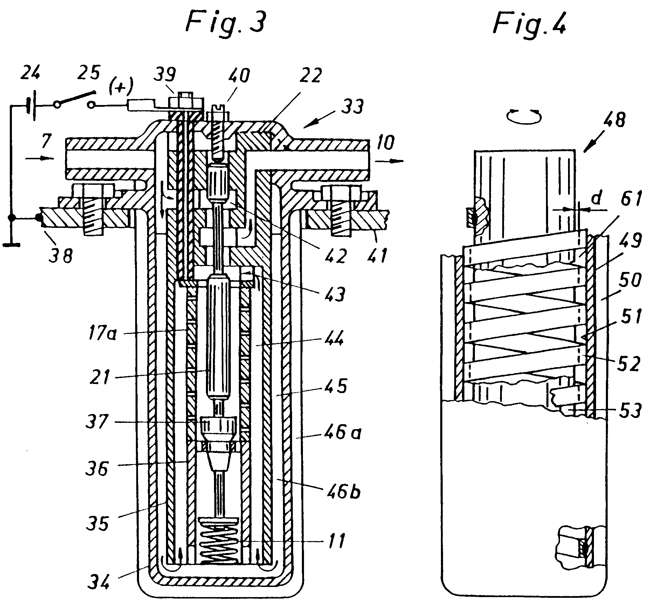

Die Fig.2 zeigt eine andere Patrone, die in die elektrische Heizkammer 12 gemäß Fig.1 eingesetzt werden kann. Hierbei ist an der Abflußöffnung 10 ein PTC-Meßelement 30 zur Kontrolle der Temperatur des vorgewärmten Kraftstoffs eingeschraubt. Elektrisch ist es mit einer Schaltvorrichtung 31 verbunden, an die auch die Heizwendel 17 und die (Fahrzeug-) Batterie 24 mit dem Schalter 25 angeschlossen ist. Ein Ende der Heizwendel 17 ist z.B. elektrisch leitend mit dem Gehäuse des Dieselvowärmers 1 und der Masse- bzw. Minus-Leitung der Batterie 24 verbunden, während das andere Ende isoliert in das Gehäuse der Schaltvorrichtung 31 hineingeführt ist. Die Schaltvorrichtung 31 kann eine Halbleiterschaltung oder im einfachsten Falle ein Relais enthalten, dessen Erregerwicklung mit dem PTC-Meßelement 30 hintereinandergeschaltet ist und dessen Schaltkontakt, wie eingezeichnet, mit der Heizwendel 17 in Verbindung steht. Das Relais wird automatisch aktiviert, wenn der Schalter 25 geschlossen ist und wenn und solange der Kraftstoff die gewünschte Temperatur an der Abflußöffnung 10 nicht erreicht hat. Der übrige Aufbau und die Wirkungsweise sind hier ähnlich, wie es bei der Fig.1 gezeigt und beschrieben wurde.

Die Fig.3 zeigt einen Dieselvorwärmer 33, der in das wärmeabgebende Medium, das flüssig oder gasförmig sein kann, eintaucht. Dieser Dieselvorwärmer ist z.B. an einer Bohrung am Motorblock 41 angeflanscht, so daß er vom Kühlwasser umspült wird. Er könnte beispielsweise genauso vom Motoröl, von heißer Luft oder vom Abgas aufgeheizt werden. Mindestens z.T. wird er auch durch den Flansch 41 vom Motorblock erwärmt. Das tubenförmige oder becherartige Gehäuse 34, das z.B. aus Alu-Guß besteht und als Wärmetauscher dient, hat am äußeren wie am inneren Umfang axial angeordnete Rippen 46a und 46b. Mitten im Gehäuse 34 befindet sich eine rohrartige elektrische Heizpatrone 17a, in die ein PTC-Element in Form einer wendelförmigen Leiterbahn integriert ist, welche selbst einen positiven Temperaturkoeffizienten besitzt. Die Heizpatrone 17a wird von einem Rohr 35 umgeben, das unten offen ist und rundum an die inneren Rippen 46b des Gehäuses 34 angrenzt, so daß dazwischen axial verlaufende Kanäle 45 für den vorzuwärmenden Kraftstoff gebildet sind. Das untere Ende der Heizpatrone 17a ist durch eine elektrisch leitende Buchse 36, die ein Lager 37 für den Kolben 21 besitzt, fest mit dem Gehäuse 34 und dadurch mit dem Masse-Kontakt 38 verbunden. Oben ist die Heizpatrone 17a an einen elektrisch isolierten Kontakt 39 angeschlossen. Eine in der Buchse 36 angeordnete Feder 11 drückt den Kolben 21 in seine Ruhelage, die mittels einer Stellschraube 40 am Wegeventil 22 wählbar ist.

Wirkungsweise: Bei Kaltstart oder unzureichender Kraftstofftemperatur ist die PTC-Heizpatrone 17a eingeschaltet, die den Kolben 21 herabzieht. Der obere Ventilkanal 42-10 wird dadurch geschlossen und der untere, vorher teilweise geöffnete Kanal 43-10 ganz geöffnet. Demzufolge fließt der gesamte Kraftstoff von der Zuleitung 7 durch die Wärmetauscher-Kanäle 45. Danach strömt er in Pfeilrichtung aufwärts durch die elektrische Heizkammer 44 und die untere Ventilöffnung 43 zur Abflußöffnung 10. Sobald der Wärmetauscher die gewünschte Kraftstofftemperierung allein schafft, wird die elektrische Heizung automatisch abgeschaltet und der Kolben 21 mittels der Feder 11 in seine Ruhelage an der Stellschraube 40 zurückgedrückt. Dort bleibt er bei eingetretener Motorbetriebstemperatur, so daß dann nur noch ein Zweigstrom durch den Wärmetauscher fließt. Der zur Schnellen Aufheizung überdimensionierte Wärmetauscher wird dadurch von anfänglicher Maximalleistung auf seine Normalleistung zurückgestellt, bei der keine Übererwärmung des Kraftstoffs am Ausgang 10 eintritt.

Der Dieselvorwärmer 48 gemäß Fig.4 hat einen eintauchbaren Wärmetauscher mit kontinuierlich einstellbarer und regulierbarer Wärmeübertragung. Das becherartige Gehäuse 49 des Wärmetauschers, das z.B. aus Alu-Guß besteht, hat außen Rippen 50 und innen eine glatte Zylinderbohrung 51. Eine schraubenförmige Wendel 52 aus gut wärmeleitfähigem Material, wie z.B. Alu-Flachband, ist so gewickelt, daß sie mit Vorspannung an der Wandung der Zylinderbohrung 51 anliegt. Ein Ende der Wendel 52, wie beispielsweise das untere, ist mit dem Gehäuse 49 gegen Verdrehung fest verbunden. Innerhalb der Wendel 52 befindet sich z.B. ein Rohr 53 oder das Rohr 35 der Heizpatrone in einem normalerweise kleinen Abstand d. Mit dem Rohr 53 ist das obere Ende der Wendel 52 drehsicher verbunden. Die Wendel kann vorteilhaft am Rohr wie am Gehäuse durch eine Rast- oder Steckverbindung mittels Nut und Zahn drehsicher befestigt sein (nicht gezeichnet). Sie kann auch aus anschmiegsamem, wärmeleitfähigem Gaze-Band (z.B. Metallband) bestehen.
Wirkungsweise: Der vorzuwärmende Kraftstoff strömt in der Zylinderbohrung 51 um das Rohr 53 (oder 35) und durch den Kanal, den die Wendel 52 mit ihren im Abstand voneinander gewickelten Windungen bildet. Der Kraftstoff wird stark vorgewärmt, weil die Wendel 52 einerseits normalerweise engen, gut metallisch leitenden Kontakt mit dem Gehäuse 49 hat und sie andererseits eine große 100 Oberfläche zur Wärmeabgabe besitzt. Wenn in anderen Anwendungsfallen oder zeitweise eine weniger starke Wärmeübertragung erwünscht ist, wird das Rohr 53 relativ zum Gehäuse 49 so verdreht, daß sich mindestens ein Teil der Wendelwindungen 52 von der Zylinderwand 51 löst. Die gelösten Windungen, die sich bis an das innere Rohr 53 anlegen können, übertragen kaum noch Wärme, weil sie durch den Dieselkraftstoff, der eine schlechte Wärmeleitfähigkeit besitzt, vom Gehäuse 49 isoliert sind. Der Dieselvorwärmer 48 ist dadurch in ein- und derselben Größe sehr universell anpaßbar und verwendbar.

Die Fig.5 zeigt einen verstellbaren und regulierbaren Dieselvorwärmer 55 mit einem durchlaufenden, inneren Rohr 56, durch welches das wärmeabgebende Medium, wie z.B. das 100 Kühlwasser, fließt. Rippen 57 darin dienen zur besseren Wärmeübertragung. Ein äußeres, rohrartig ausgebildetes Gehäuse 60 umgibt das innere Rohr 56 konzentrisch so, daß zwischen beiden ein Ringspalt 61 gebildet wird. Der an beiden Rohrenden geschlossene Ringspalt 61 besitzt eine Zuflußöffnung 58 und eine Abflußöffnung 65 für den Kraftstoff. Das Rohr 56, das außen glatt ist, wird von einer schraubenförmigen und mit Vorspannung gewickelten Wendel 62 eng umschlungen. Auch diese Wendel besteht aus gut wärmeleifähigem Material, wie Alu-Flachband. Ein Ende davon ist z.B. in einer Nut 59 am Gehäuse 60 befestigt und das andere Ende frei, bzw. verstellbar oder regulierbar.
Dazu sind beispielsweise Zähne 63 an der Wendel 62 angebracht, in die ein am Gehäuse 60 befestigtes, drehverstellbares Zahnrad 64 eingreift. Statt dessen kann auch eine Schraube mit Schneckengewinde vorteilhaft verwendet werden. Bei starker, kräftiger Umschlingung des Rohres 56 wird mehr, und bei gelockerten Windungen weniger Wärme auf den Kraftstoff im Ringspalt 61 übertragen. Durch die Verstellbarkeit ist auch der Dieselvorwärmer 55 sehr anpassungsfähig und universeller verwendbar. Eine automatische, stetige Regulierung der Kraftstofftemperatur wird dadurch erreicht, daß in einer anderen Ausführung des Dieselvorwärmers 55 die Wendel 62 mit einem am Gehäuse 60 befestigten und bei der Abflußöffnung 65 angeordneten Dehnstoffelement 66 verbunden ist. Dieses Thermostat 66 variiert den Wärmeaustausch durch das Schlingband so, daß die Kraftstofftemperatur an der Abflußöffnung 65 nahezu konstant bleibt.
Die Wendel 62 ermöglicht einen kostengünstigen Aufbau des Dieselvorwärmers 55; sie vergrößert die zur Wärmeübertragung dienende Oberfläche, bildet einen geeigneten Kanal für den Kraftstoff, und sie dient hier außerdem noch zur Temperaturregulierung. In einer weiteren Ausführung können einige Windungen der Wendel 62 mit dem Rohr 56 z.B. durch Schweißen fest verbunden und nur die übrigen Windungen verstellbar sein. Eine zwischen den verstellbaren Windungen 62 und dem Rohr 56 befestigte, leitfähige Gaze kann zur Verbesserung der Wärmeübertragung beitragen (nicht gezeichnet).

Die Fig.6 zeigt einen regelbaren Dieselvorwärmer 68 mit einem Wärmetauscher-Rohr 69, das radiale Rippen 70 mit unterschiedlichem Durchmesser besitzt. Diese Rippen 70 sind am Rohr 69 entlang abwechselnd in Gruppen mit größerem und kleinerem Durchmesser hintereinander angeordnet. Über dem Rohr 69 befindet sich ein Hülsenschieber 72, der zur Wärmetauscher-Regulierung mit dem Kolben 71, 21 oder einem Thermostaten 66 verbunden ist. Der Hülsenschieber 72 besitzt Einschnitte 73, die sich, um 180^{o} versetzt, paarweise in Strömungsrichtung gegenüberliegen und die in axialer Richtung einen Abstand voneinander haben, der den Abstand gleichgroßer Rippengruppen entspricht. Das Rohr 69 mit dem Schieber 72 ist in ein Gehäuse 74 eingebaut, in dem eine Kraftstoff-Zuflußöffnung 76 und diagonal gegenüber die Abflußöffnung 75 sitzt. Die Fig.6 zeigt, daß bei dieser Schieber-Ausführung die kleinen Rippen durch ihre Oberfläche ständig zum Wärmeaustausch dienen. Die größeren Rippen sind dagegen, je nach Schieberstellung, wahlweise zu- und abschaltbar, wodurch sie mehr oder weniger zur Kraftstoff-Vorwärmung beitragen. Der Schieber 72, der aus wärmeisolierendem oder auch metallischem Werkstoff bestehen kann, ist leichtgängig verstellbar und er kann trotz kleinem Verstellweg s viele Rippen 70 zu- und abschalten. Wird der Kolben 71 um den Verstellweg s nach links verschoben, so liegen praktisch alle Rippen für die Wärmeübertragung an den Kraftstoff frei. In der gezeichneten Stellung sind dagegen mehrere große Rippen vom Schieber 72 isoliert, d.h. abgeschaltet.

Der Dieselvorwärmer 80 in Fig.7, durch dessen Innenrohr z.B. das Kühlwasser strömt, hat zumindest im äußeren Mantel-Bereich axial verlaufende Rippen 81, die die Kanäle 82 für den vorzuwärmenden Kraftstoff bilden. Mindestens an einem Ende der Kanäle 82 ist ein Drehschieber 83 angebracht, der rundum Zähne 84 besitzt, die sich bei ganz eingeschaltetem Wärmetauscher hinter den Rippen 81 befinden. Zweckmäßigerweise ist die Zähnezahl des Drehschiebers 83 kleiner als die Anzahl der Kanäle 82, so daß bei Schieberdrehung der Kraftstofffluß nur durch einen Teil der Kanäle 82 gesperrt oder zumindest gedrosselt wird, während die übrigen andauernd offenbleiben. In Fig.7 steht beispielsweise hinter jeder zweiten Rippe 81 ein Zahn 84 des Drehschiebers 83.
So ist der leistungsmäßig weit überdimensionierte Wärmetauscher z.B. beim Kaltstart und Kaltlauf des Motors zunächst ganz eingeschaltet und nach schnellem Erreichen der Motor-Betriebstemperatur durch Schieberdrehung auf Teilleistung gestellt. Bei Teilleistung strömt der Kraftstoff durch weniger Kanäle mit gleichzeitig höherer Geschwindigkeit, wobei er weniger warm wird. Der Drehschieber kann mit dem Steuer-Kolben 71 oder mit einem Thermostat 66 (z.B. aus Dehnstoff oder Bimetall) verbunden sein. Auch hierbei genügt ein kleiner Verstellweg zur Begrenzung oder Regulierung der Kraftstofftemperatur. Der Wärmetauscher 80 kann vorteilhaft aus Normteilen hergestellt werden, indem ein Rippenrohr konzentrisch in ein weiteres Rohr gesteckt wird.

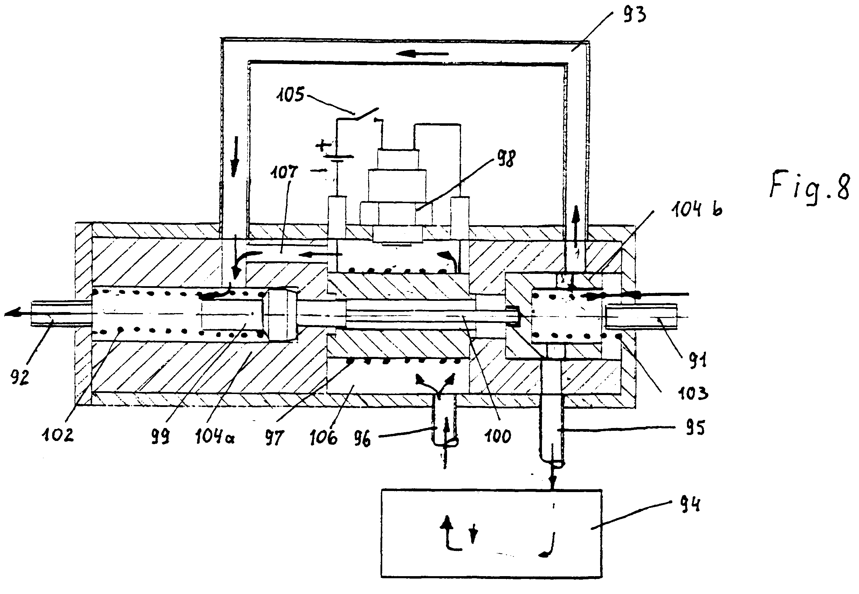

In der Figur 8 wird ein Dieselvorwärmer mit einer Umgehungsleitung 93 dargestellt. Es ist eine Skizze der Gesamtvorrichtung mit einem Längsschnitt des Vorwärmergehäuses.

Der Dieselkraftstoffvorwärmer besitzt zwei massefreie elektrische Anschlüsse für die Zuführung elektrischer Energie zur Heizwendel 97. Weiterhin weist er zwei Anschlüsse 91und 92 für den Ein- und Austritt des Dieselkraftstoffs auf, wobei der Kraftstoffaustritt 92 möglichst nahe beim Eintritt in den Kraftstoffilter liegen sollte. Über zwei weitere (nicht dargestellte) Anschlüsse wird der Wärmetauscher 94 vom Kühlwasser durchströmt.

Über den Anschluß 91 tritt der Dieselkraftstoff aus dem Tank kommend in den Dieselkraftstoffvorwärmer ein und verläßt ihn wieder über den Anschluß 92. Im Innern des Vorwärmergehäuses 104a,104b, das auch einteilig sein kann, befindet sich ein Dehnstoffelement 99, welches durch eine Feder 102 kraftschlüssig mit dem Gehäuseteil 104a verspannt ist. Das Dehnstoffelement 99 verschiebt mittels einer Druckstange 100 einen Schieber 101 gegen die Rückstellkraft einer Feder 103 bei steigender Temperatur des Dieselkraftstoffs am Ort des Dehnstoffelements 99 in der Zeichnung nach rechts. Bei sinkender Temperatur des Kraftstoffs drückt die Feder 103 den Schieber 101, die Druckstange 100 und den Stößel des Dehnstoffelementes 99 in der Zeichnung nach links. Je nach Stellung des Schiebers 101 wird eine Leitung 95 zu einem Wärmetauscher 94, der den Kraftstoff mittels Kühlwasserwärme aufheizt, oder zu einer Umgehungsleitung 93 freigegeben. Weiterhin beinhaltet das Vorwärmergehäuse 104a,104b eine Heizwendel 97 zum Aufheizen des Kraftstoffs mittels elektrischer Energie. Die Heizwendel 97 ist in Reihe mit einem Thermostaten 98 geschaltet. Der elektrische Heizstrom kann z.B. dem Bordnetz eines Kraftfahrzeuges entnommen werden.

Der Kraftstoffstrom, der durch den Anschluß 91 eintritt, wird im Schieber 101 in zwei Teilströme aufgeteilt. Dabei strömt ein Teilstrom durch die Umgehungsleitung 93 und der andere durch die Leitung 95 zum Wärmetauscher 94 und von dort zurück zu einer Kammer 106, in der sich die Heizwendel 97 befindet, über eine Leitung 96. Dabei sind folgende Betriebszustände zu unterscheiden:
a.
   Der Kraftstoff hat im Zulauf bereits eine Temperatur oberhalb der kritischen Paraffin-Ausscheidungstemperatur. Ein Aufheizen des Dieselkraftstoffs wird deswegen nicht benötigt. Das Dehnstoffelement 99 drückt aufgrund der hohen Kraftstofftemperatur den Schieber 101 nach rechts, wodurch Kanal 95 weitgehend geschlossen und Kanal 93, die Umgehungsleitung, geöffnet wird. Die Leitung 95 wird deshalb nicht ganz geschlossen, damit der in ihr befindliche Dieselkraftstoff nicht altert oder verharzt. So wird über den Wärmetauscher 94 nur verschwindend wenig Kühlwasserwärme zugeführt. Außerdem befindet sich der durch den Thermostaten 98 betätigte Schalter 105 im Offenzustand, so daß kein Heizstrom fließt. Es fließt somit fast die gesamte Kraftstoffmenge über die Umgehungsleitung 93 zum Dehnstoffelement 99 und von dort über den Kraftstoffaustritt 92 zum Kraftstoffilter.
b.
   Die Kraftstofftemperatur liegt unterhalb der kritischen Temperatur, bei der Paraffinkristalle ausfallen können. Das Dehnstoffelement 99 erkennt die niedrige Temperatur und läßt den Schieber 101 durch die Feder 103 nach links (in der Zeichnung) drücken. Dadurch wird die Umgehungsleitung 93 verschlossen und die Leitung 95 geöffnet. Der Kraftstoff fließt über den Wärmetauscher 94, wo er sich je nach Kühlwassertemperatur mehr oder weniger stark aufheizt. Ist das Kühlwasser noch kalt, strömt der kalte Kraftstoff in die Kammer 106 zur Heizwendel 97 und zum Thermostaten 98, der daraufhin den Schalter 105 betätigt, so daß Strom zur Heizwendel fließt. Die Kraftstofftemperatur in der Kammer 106 der Heizwendel 97 übersteigt dabei die gewünschte Kraftstofftemperatur am Ausgang zum Kraftstoffilter. Das Dehnstoffelement 99 heizt sich auf und drückt mittels der Druckstange 100 den Schieber 101 etwas nach rechts (in der Zeichnung), so daß die Umgehungsleitung 93 teilweise geöffnet wird und innerhalb gewisser Toleranzen die Sollausgangstemperatur erreicht wird.
c.
   Heizt sich aufgrund sehr geringen Kraftstoffdurchsatzes der Kraftstoff in der Kammer 106 der Heizwendel 97 zu stark auf, dann öffnet oberhalb einer vorzugebenden Temperaturschwelle der Thermostat 98 den Schalter 105 und unterbricht damit den Stromkreis, wodurch sich wieder ein Temperaturabfall und somit ein sich periodisch wiederholender Regelvorgang ergibt. Heizt sich in der Zwischenzeit das Kühlwasser auf, dann trifft der im Wärmetauscher 94 vorgewärmte Kraftstoff auf die Heizwendel 97. Die Kraftstofftemperatur in der Kammer 106 der Heizwendel 97 steigt dadurch relativ schneller an und erreicht dementsprechend eher die Temperatur, bei der der Thermostat 98 den Schalter 105 öffnet und damit den Strom zur Heizwendel 97 unterbricht. Dieser periodische Regelvorgang wiederholt sich in gleicher Weise, wie oben beschrieben, so lange, bis der den Wärmetauscher 94 verlassende Kraftstoff eine so hohe Temperatur aufweist, daß der Schalter 105 dauernd geöffnet bleibt. Bei zu hoher Aufheizung des Kraftstoffs im Wärmetauscher 94 schiebt das Dehnstoffelement 99 mit der Druckstange 100 den Schieber 102 (in der Zeichnung) nach rechts, wodurch nicht vorgewärmter Kraftstoff durch die Umgehungsleitung 93 in einer gewissen Menge zum Dehstoffelement 99 fließt und sich mit dem aus dem Wärmetauscher 94 kommenden vorgewärmten Kraftstoffstrom mischt. Hierdurch wird innerhalb gewisser Toleranzen die Sollausgangstemperatur des Kraftstoffs sichergestellt.

Wärmetauscher 94 und Vorwärmergehäuse 104a,104b können baulich direkt miteinander verbunden sein.

## Patentansprüche

1. Dieselvorwärmer für Motoren, insbesondere Fahrzeugmotoren, wobei der Kraftstoff sowohl elektrisch als auch durch einen Wärmetauscher erwärmbar ist, mit einer separaten, an den Wärmetauscher anbaubaren elektrischen Heizkammer mit elektrisch beaufschlagtem, aus einem Werkstoff mit positivem Temperaturkoeffizienten bestehenden Heizelement, das durch eine Schaltvorrichtung ein- und ausschaltbar ist,
**dadurch gekennzeichnet,**
daß sowohl die elektrische Heizkammer (12) als auch der Wärmetauscher (6; 34) an ein 3/2-Wegeventil (22) angeschlossen sind, wobei bei aktiviertem Ventil (22) der gesamte Kraftstoff den Wärmetauscher (6; 34) und die ihm nachgeschaltete Heizkammer (12) durchfließt und bei inaktivem Ventil (22) nur ein Zweigstrom des Kraftstroms durch den Wärmetauscher (6; 34) geleitet wird,
daß das Heizelement als Heizwendel (17) ausgebildet ist und daß zur temperaturabhängigen Regelung ein verstellbarer Kolben (21), der mindestens zum Teil aus ferromagnetischem Werkstoff besteht, innerhalb der Heizwendel (17) und des Ventils (22) verschiebbar angeordnet ist.

2. Dieselvorwärmer nach Anspruch 1,
**dadurch gekennzeichnet,**
daß ein PTC-Heizelement (15) am Ausgang der Heizkammer (12) und unmittelbar an die Heizwendel (17) angrenzend angeordnet ist, mit der es hintereinandergeschaltet ist.

3. Dieselvorwärmer nach Anspruch 1,
**dadurch gekennzeichnet,**
daß das PTC-Meßelement (30) am Ausgang der Heizkammer (12) mit Abstand von der Heizwendel (17) angeordnet ist.

4. Dieselvorwärmer nach Anspruch 1,
**dadurch gekennzeichnet,**
daß eine Stellvorrichtung (23; 40) für den Kolben (21) zur Veränderung seiner Ruhelage vorgesehen ist.

5. Dieselvorwärmer nach Anspruch 1,
**dadurch gekennzeichnet,**
daß zum Verstellen des Kolbens (21) in der Heizkammer (12) ein Thermostat vorgesehen ist.

6. Dieselvorwärmer nach Anspruch 1 mit einem Wärmetauscher aus einem rohrartigen Körper, der innen vom Kühlwasser und außen mäandierend vom Kraftstoff umströmt wird,
**dadurch gekennzeichnet,**
daß auf seiner äußeren Mantelfläche abwechselnd nach rechts und links versetzte Rippen (5) mit stirnseitigen Dichtungs-Scheiben (3) das mäandierende Kanalsystem (4) bilden, daß ein Quersteg (27) den Kanal (4) schließt und daß rechts und links vom Steg (27) Anschlußbohrungen (7,8,9)vom Wegeventil (22) in den Kanal (4) einmünden.

7. Dieselvorwärmer nach Anspruch 1 mit einem Wärmetauscher aus einem bech-erartigen Gehäuse, das in ein wärmeabgebendes Medium eintaucht,
**dadurch gekennzeichnet,**
daß das Gehäuse (34) mit äußeren und inneren axial gerichteten Rippen (46a, 46b) in der Mitte eine austauschbare Patrone aus einem einseitig offenen Rohr (35) aufweist, das mit den inneren Rippen (46b) Kanäle (45) bildet und in das die elektrische Heizkammer (44) eingebaut ist, welche auf der anderen Seite mit dem Wegeventil (22) in Verbindung steht.

8. Dieselvorwärmer nach Anspruch 1 mit einem Wärmetauscher, der zwischen dem wärmeabgebenden Medium und dem Kraftstoff ein Rohr mit radialen Rippen aufweist,
**dadurch gekennzeichnet,**
daß die Rippen (70) am Rohr (69) entlang abwechselnd in Gruppen mit größerem und kleinerem Durchmesser hintereinander angeordnet sind, daß sich über dem Rohr (69) ein Hülsenschieber (72) mit Einschnitten (73) befindet, die einander paarweise gegenüberliegen, um Rippen (70) wahlweise freizulegen, und daß der Hülsenschieber (72) zur Wärmeregulierung mit einer Einstellvorrichtung (71; 21; 66) in Verbindung steht.

9. Dieselvorwärmer nach Anspruch 1 mit einem Wärmetauscher, der zwischen dem wärmeabgebenden Medium und dem Kraftstoff ein Rohr mit axialen Rippen aufweist,
**dadurch gekennzeichnet,**
daß die Rippen (81) Kanäle (82) bilden, daß mindestens an einem Ende der Kanäle (82) ein Drehschieber (83) angebracht und mit einer Einstellvorrichtung (71; 66) verbunden ist, um den Kraftstoffdurchfluß durch mehrere der Kanäle (82) zu regeln, wahlweise abzusperren oder mindestens zu behindern.

10. Dieselvorwärmer insbesondere nach Anspruch 1 mit einem Wärmetauscher, der konzentrisch zueinander angeordnet ein inneres und ein äußeres Rohr aufweist, die einen Ringspalt für das eine Medium bilden, eährend das andere Medium mit dem inneren Rohr in Verbindung steht,
**dadurch gekennzeichnet,**
daß eine Wendel (52; 62) aus wärmeleitfähigem, spannbarem Band im Ringspalt (61) angeordnet ist, die einen Kanal für den Kraftstoff bildet, und daß die Wendel (52; 62) mindestens teilweise mittels einer Stellvorrichtung (64; 66) von einem der beiden Rohre (56, 49) lösbar ist, um den Wärmeübergang an den Kraftstoff zu verändern.

11. Dieselvorwärmer nach Anspruch 10,
**dadurch gekennzeichnet,**
daß die Wendel (52; 62) mindestens zum Teil aus gazeartigem Band besteht.

12. Dieselvorwärmer nach Anspruch 10 oder 11,
**dadurch gekennzeichnet,**
daß das eine Ende der Wendel (52; 62) am inneren Rohr (56) und das andere Ende am Gehäuse (49) befestigt ist, wobei Rohr (56) und Gehäuse (49) relativ zueinander einstellbar sind, um den Wärmeübergang zwischen beiden Medien den Erfordernissen anzupassen.

13. Dieselvorwärmer nach Anspruch 10 oder 11,
**dadurch gekennzeichnet,**
daß die Stellvorrichtung (64) einen Dehnstoff-Thermostaten (66) umfaßt, der mit der Wendel (62) verbunden ist.

14. Dieselvorwärmer für Motoren, insbesondere Fahrzeugmotoren, wobei der Kraftstoff sowohl elektrisch als auch durch einen Wärmetauscher erwärmbar ist, mit einer separaten, an den Wärmetauscher anbaubaren elektrischen Heizkammer mit elektrisch beaufschlagtem, aus einem Werkstoff mit positivem Temperaturkoeffizienten bestehenden Heizelement, das durch eine Schaltvorrichtung ein- und ausschaltbar ist,
**dadurch gekennzeichnet,**
daß in einem Gehäuseteil (104b) des Dieselvorwärmers ein Schieber (101) axial verschiebbar angeordnet ist, der einen Kraftstoffeinlaß (91) und zwei Kraftstoffauslässe (Umgehungsleitung 93, Leitung 95) aufweist,
daß ein Dehnstoffelement (99) zum Betätigen des Schiebers (101) in Abhängigkeit von der Kraftstoff-Austrittstemperatur vorgesehen ist,
daß das Heizelement als Heizwendel (97) ausgebildet ist, die über einen Thermostaten (98) mit zugeordnetem Schalter (105) mit Strom zum Aufheizen in Abhängigkeit von der Temperatur des den Wärmetauscher (94) verlassenden Kraftstoffs beaufschlagt wird, und
daß zwischen dem Schieber (101) und einem Raum (108) zur Aufnahme des Dehnstoffelements (99) eine die Heizwendel (97) und den Wärmetauscher (94) umgehende Umgehungsleitung (93) vorgesehen ist.

15. Dieselvorwärmer nach Anspruch 14,
**dadurch gekennzeichnet,**
daß zwischen Dehnstoffelement (99) und Schieber (101) eine Druckstange (100) zum differenzierten Öffnen und Schließen der Schieberauslässe (95,96) in Abhängigkeit von der Kraftstofftemperatur am Dieselvorwärmer-Austritt (92) vorgesehen ist.

16. Dieselvorwärmer nach Anspruch 14 oder 15,
**dadurch gekennzeichnet,**
daß zwischen einen Raum (106) zum Aufheizen des Kraftstoffs durch die Heizwendel (97) und dem Raum (108) zur Aufnahme des Dehnstoffelements (99) eine Kraftstoff-Verbindungsleitung (197) vorgesehen ist.

17. Dieselvorwärmer nach einem der Ansprüche 14 bis 16,
**dadurch gekennzeichnet,**
daß zum kraftschlüssigen Verspannen des Dehnstoffelements (99) mit dem einen Gehäuseteil (104a) eine Druckfeder (102) vorgesehen ist.

18. Dieselvorwärmer nach einem der Ansprüche 14 bis 17,
**dadurch**
daß zum kraftschlüssigen Verspannen des Schiebers (101) mit dem anderen Gehäuseteil (104b) eine Druckfeder (103) vorgesehen ist.
